# FASCICULE DE BREVET EUROPEEN

(11) **EP 3 349 958 B1**
(45) Date de publication et mention de la délivrance du brevet: **12.02.2020**
(21) Numéro de dépôt: 16781499.5
(22) Date de dépôt: 16.09.2016
(51) Int. Cl.: B29C 45/00, B62D 3/02, B62D 5/04, B29L 31/56

(54) **PROCÉDÉ DE LA FABRICATION D'UN BOUCHON EN DEUX PARTIES POUR UN CARTER DE DIRECTION**
VERFAHREN ZU HERSTELLUNG EINES ZWEITEILIGEN VESCHLUSSES FÜR EIN GEHÄUSE EINES LENKUNGGETRIEBES
PROCESS FOR MANUFACTURING A CLOSURE MADE FROM TWO PARTS FOR A STEERING GEAR HOUSING

(30) Priorité: 17.09.2015 FR 1558749
(43) Date de publication de la demande: 25.07.2018
(73) Titulaire: JTEKT Europe, 69540 Irigny (FR)
(72) Inventeur: REY, Laurent, 69100 Villeurbanne (FR); GUERIN, Mickael, 69126 Brindas (FR)
(74) Mandataire: Chevalier, Renaud Philippe
(86) Numéro de dépôt international: PCT/FR2016/052350
(87) Numéro de publication internationale: WO 2017/046541

(56) Documents cités:
- DE-A1-102012 110 373
- DE-A1-102014 103 576
- FR-A1- 2 998 879

## Description

La présente invention concerne le domaine général des dispositifs de direction assistée pour véhicules automobiles, et plus particulièrement le domaine des carters qui sont utilisés pour loger les mécanismes de tels dispositifs de direction.

Il est connu de recouvrir tout ou partie d'un mécanisme de direction, et notamment les éléments de transmission à engrenage d'un tel mécanisme, par un carter rigide qui assure le guidage, la protection et/ou le maintien dans un lubrifiant dudit mécanisme.

Pour permettre la mise en place ou l'entretien du mécanisme, et par exemple pour permettre la vidange ou le remplissage en lubrifiant, le carter est pourvu d'un ou plusieurs orifices d'accès, qui doivent bien entendu être obturés, en fonctionnement normal, pour garantir l'étanchéité du carter.

A cet effet, il est connu, notamment par les documents DE 10 2012 110 373 ou FR-2 998 879, de fermer l'orifice d'accès à un carter au moyen d'un bouchon qui comporte d'une part un moyeu, porteur d'un organe d'étanchéité, du genre joint torique, qui vient au contact de la paroi de l'orifice d'accès, et d'autre part une collerette de fixation qui maintient le moyeu en place dans l'orifice d'accès au carter, par encliquetage.

Afin de réduire le poids, ainsi que le coût et le temps de fabrication du bouchon, celui-ci est avantageusement réalisé d'un seul tenant, par moulage par injection d'un matériau polymère.

Par commodité de démoulage, le plan de joint du bouchon, selon lequel on opère la séparation des différentes parties du moule d'injection, contient généralement l'axe central du bouchon, c'est-à-dire que ledit plan de joint s'étend parallèlement audit axe central (et donc parallèlement à la direction selon laquelle le bouchon est ensuite enfoncé dans l'orifice d'accès), de telle sorte que le plan de joint correspond sensiblement au plan sagittal qui coupe fictivement le bouchon, et plus particulièrement le moyeu, par son milieu, divisant ainsi (fictivement) ledit bouchon en deux demi-bouchons hémi-cylindriques.

Or, les inventeurs ont constaté qu'un tel procédé de fabrication par moulage peut présenter certains inconvénients, qui nuisent à la qualité de l'étanchéité procurée par le bouchon.

En effet, au niveau du plan de joint, la jonction entre les deux parties hémi-cylindriques constitutives du bouchon peut présenter des défauts d'alignement ou des bavures, liées par exemple à un léger défaut de positionnement des empreintes correspondantes du moule d'injection.

Or, de tels défauts d'alignement ou de telles bavures peuvent créer localement des irrégularités de surface, de type décrochements radiaux, sur la paroi latérale du bouchon qui reçoit l'organe d'étanchéité.

Ceci a pour effet de décoller localement ledit organe d'étanchéité de ladite paroi latérale, et donc de faire apparaître un défaut d'étanchéité (passage de fuite) dans la zone concernée.

On notera de surcroît qu'il est difficile (dans le cas d'une bavure qui crée une surépaisseur de matière), voire impossible (dans le cas d'un décalage radial des empreintes de moulage) de corriger a posteriori de tels défauts, par un usinage adapté. En effet, tout enlèvement de matière risque d'affecter, et notamment d'excentrer ou de réduire excessivement, le diamètre primitif du moyeu, au risque de compromettre le montage et le serrage (par constriction élastique) de l'organe d'étanchéité sur le moyeu.

Par ailleurs, certains bouchons, au sein desquels l'organe d'étanchéité est simplement appuyé contre un épaulement du bouchon, peuvent présenter un maintien axial insuffisant dudit organe d'étanchéité.

Or, un organe d'étanchéité insuffisamment maintenu peut, tout d'abord, glisser le long du moyeu du bouchon au moment de l'assemblage. Le mauvais placement du joint qui en résulte peut provoquer un pincement ou une dégradation prématurée dudit joint, et en tout cas être à l'origine d'un défaut d'étanchéité.

En outre, lorsque l'intérieur du carter subit une dépression par rapport à l'atmosphère qui l'environne, par exemple du fait que ledit carter est soudainement refroidi par une exposition à l'eau, ce qui peut se produire avec un carter de direction lorsque le véhicule franchit une flaque ou un passage à gué, un joint mal maintenu peut être purement et simplement aspiré à l'intérieur de la cavité du carter, sous l'effet de la dépression, et être ainsi délogé du bouchon, ce qui cause une perte irrémédiable d'étanchéité.

Les objets assignés à l'invention visent par conséquent à remédier aux inconvénients susmentionnés et à proposer un nouveau procédé de fabrication d'un bouchon qui permette d'obtenir, de façon simple, peu onéreuse, et reproductible, un bouchon qui présente une bonne robustesse et qui assure une étanchéité particulièrement fiable.

Les objets assignés à l'invention sont atteints au moyen d'un procédé de fabrication d'un bouchon comprenant un moyeu qui s'étend selon un axe central (XX') et qui est délimité radialement, autour dudit axe central (XX'), par une paroi latérale dans laquelle est creusée une gorge annulaire qui entoure l'axe central (XX') et qui est destinée à recevoir un organe d'étanchéité, ladite gorge étant comprise entre d'une part une paroi de fond, qui forme, radialement à l'axe central (XX'), le fond de ladite gorge, et d'autre part une première paroi de bord, annulaire, et une seconde paroi de bord, annulaire, qui délimitent axialement ladite gorge le long de l'axe central (XX'), ledit procédé étant caractérisé en ce qu'il comporte une étape (a) de fabrication d'un premier tronçon de moyeu, au cours de laquelle on réalise un premier tronçon de moyeu, qui s'étend selon une première portion de l'axe central et sur lequel est formée la première paroi de bord, une étape (b) de fabrication d'un second tronçon de moyeu, au cours de laquelle on réalise un second tronçon de moyeu, qui s'étend selon une seconde portion de l'axe central et sur lequel est formée la seconde paroi de bord, puis une étape (c) de constitution de moyeu, au cours de laquelle on assemble le premier tronçon de moyeu avec le second tronçon de moyeu, afin de créer la gorge annulaire entre la première paroi de bord et la seconde paroi de bord, et de telle manière que le premier tronçon de moyeu et le second tronçon de moyeu se joignent selon un plan de joint qui est sécant à l'axe central (XX') et qui est sécant à la paroi de fond de la gorge.

De la sorte, le tracé de l'intersection du plan de joint avec la paroi de fond, c'est-à-dire le tracé apparent de la jonction entre le premier tronçon de moyeu et le second tronçon de moyeu, telle que ladite jonction apparaît depuis l'extérieur sur la paroi latérale du moyeu, une fois ledit moyeu assemblé, est axialement contenu entre la première paroi de bord et la seconde paroi de bord, sur toute la circonférence de la gorge annulaire.

Avantageusement, le fait de scinder le moyeu, et plus globalement le bouchon, en deux parties initialement distinctes, fabriquées séparément l'une de l'autre, et de disposer le plan de joint transversalement, et plus préférentiellement perpendiculairement, à l'axe central (XX'), de telle sorte que l'axe central (XX') est sensiblement normal au plan de joint, plutôt que de disposer ledit plan de joint parallèlement à l'axe central (XX'), permet de fabriquer les zones fonctionnelles annulaires respectives des premier et second tronçons de moyeu, et plus particulièrement les éléments de paroi latérale du moyeu et la paroi de fond de la gorge, en préservant le caractère lisse et continu, sans décrochements (sans marches radiales), ni aspérités, ni interruptions, du contour (de préférence circulaire) desdites zones fonctionnelles, tout autour de l'axe central (XX').

En effet, il est notamment possible de fabriquer, et plus particulièrement de mouler, d'un seul tenant tout ou partie de la paroi de fond de gorge dans une empreinte unique, qui aura été créée, dans une seule et même portion de moule, par un usinage précis de type alésage, prenant pour référence à l'axe central (XX'). Une telle empreinte présentera donc un tracé cylindrique rectifié, parfaitement lisse, dépourvu de décrochement sur toute sa circonférence, c'est-à-dire sur toute la couverture azimutale dudit tracé, sur 360 degrés autour de l'axe central (XX').

Ainsi, à chaque abscisse donnée le long de l'axe central (XX'), et plus particulièrement à chaque abscisse considérée dans la plage d'abscisses comprises entre l'abscisse de la première paroi de bord et l'abscisse de la seconde paroi de bord, c'est-à-dire dans la plage d'abscisses correspondant à la paroi de fond de la gorge annulaire, la paroi latérale du moyeu formera une bande annulaire continue, moulée d'un seul bloc, tout autour de l'axe central (XX').

Une telle bande annulaire, entièrement obtenue à partir d'une empreinte formée (usinée) d'un seul tenant, présentera ainsi tout autour de l'axe central (XX'), c'est-à-dire en continu sur 360 degrés autour de l'axe central (XX'), un contour (une circonférence apparente) fermé, lisse et régulier, sans décrochements ni aspérités.

En d'autres termes, l'orientation du plan de joint choisie selon l'invention est telle que ledit plan de joint n'interfère pas avec la géométrie annulaire, et plus préférentiellement circulaire, des zones fonctionnelles du moyeu, et notamment avec la géométrie annulaire de la paroi de fond de la gorge, si bien que lesdites zones fonctionnelles, et en particulier la paroi de fond de la gorge, présentent toujours, en section perpendiculaire à l'axe central (XX'), et en vis-à-vis de l'extérieur, au moins une bande annulaire continue dont le tracé est lisse et régulier, sans décrochements ni aspérités, de telle sorte que l'organe d'étanchéité, du genre joint torique, peut épouser parfaitement ladite bande, en suivant exactement le tracé (typiquement circulaire) de ladite bande, sans décoller radialement dudit tracé, et donc sans laisser de passage de fuite entre ledit organe d'étanchéité et ladite bande de paroi latérale du moyeu contre laquelle s'appuie ledit organe d'étanchéité.

Par ailleurs, du fait que l'orientation du plan de joint choisie par l'invention permet de conférer à chacun des premier et second tronçons de moyeu une géométrie cylindrique annulaire propre, et notamment une géométrie circulaire de révolution, centrée sur l'axe central (XX'), on peut aisément aligner le premier tronçon de moyeu par rapport au second tronçon de moyeu, par auto-centrage, sur le même axe central. A une abscisse donnée, on évite ainsi, lors de l'assemblage desdits premier et second tronçons de moyeu, toute excentration, et donc tout décalage radial de nature à provoquer des décrochements radiaux à la surface apparente de la paroi latérale du moyeu.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective éclatée de dos, une variante de réalisation d'un bouchon selon l'invention.
La figure 2 illustre, selon une vue en perspective éclatée de face, le bouchon de la figure 1.
La figure 3 illustre, selon une vue éclatée, en coupe dans le plan sagittal du bouchon contenant l'axe central, le bouchon des figures 1 et 2.
La figure 4 illustre, selon une vue d'ensemble en coupe dans le plan sagittal du bouchon contenant l'axe central, le bouchon des figures 1 à 3 assemblé, garni de son organe d'étanchéité, et mis en place dans l'orifice d'accès d'un carter.
Les figures 5 et 6 illustrent, selon des vues en projection respectivement de dos puis de face, le premier tronçon de moyeu du bouchon des figures 1 à 4.
La figure 7 est une vue de détail du premier tronçon de moyeu de la figure 5.
Les figures 8 et 9 illustrent, selon des vues en projection respectivement de dos puis de face, le second tronçon de moyeu du bouchon des figures 1 à 4.
La figure 10 illustre, selon une vue schématique en coupe sagittale, une variante de réalisation de bouchon selon l'invention, au sein de laquelle le premier tronçon de moyeu forme une partie femelle dans laquelle s'emboîte le second tronçon de moyeu, dont l'extrémité de la paroi de fond de gorge forme la partie mâle.

La présente invention concerne un procédé de fabrication d'un bouchon 1.

Ledit bouchon 1 est avantageusement destiné à faire partie d'un système de protection 2 destiné à protéger un mécanisme, et plus particulièrement à protéger un mécanisme de direction au sein d'un véhicule.

Ledit mécanisme peut par exemple comprendre un réducteur à engrenage (notamment à roue tangente et vis sans fin), ou bien encore des organes de manœuvre de direction incluant par exemple un pignon d'entraînement qui vient en prise sur une crémaillère de direction, elle-même montée en translation dans un carter de direction de telle sorte que le déplacement en translation de ladite crémaillère commande la modification de l'angle de braquage (angle de lacet) des roues directrices du véhicule.

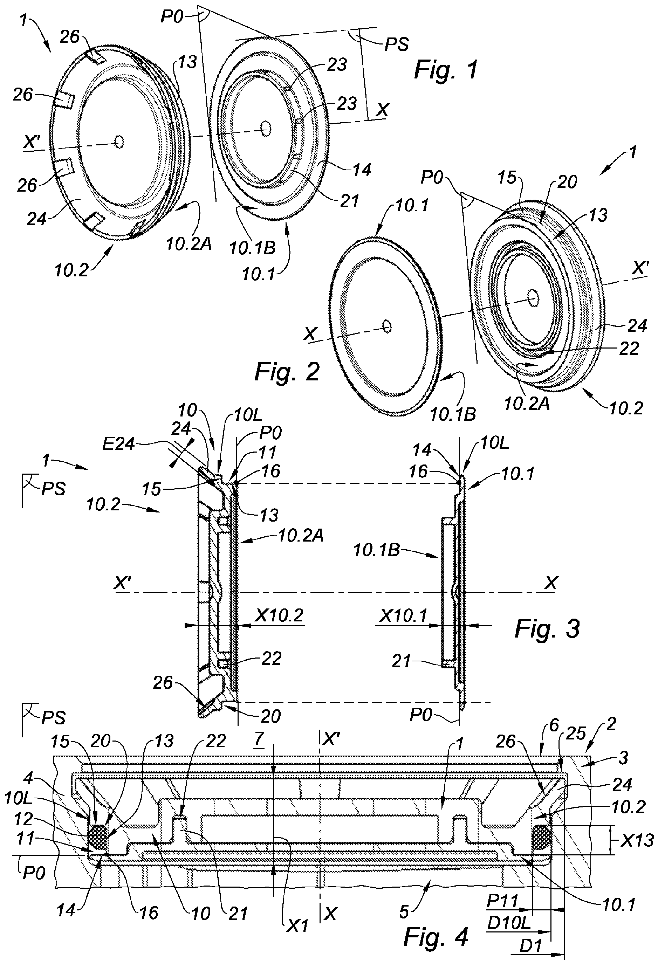

Tel que cela est illustré sur la figure 4, le système de protection 2 comprend de préférence un élément de carter 3 qui forme une paroi de carter 4 délimitant une chambre 5 qui est destinée à recevoir et abriter le mécanisme, ladite paroi de carter 4 étant percée d'au moins un orifice d'accès 6 qui permet d'accéder à la chambre 5, et plus particulièrement d'introduire le mécanisme dans ladite chambre 5 et/ou d'entretenir ledit mécanisme, depuis l'extérieur 7 de l'élément de carter 3.

Le bouchon 1 obture l'orifice d'accès 6, avantageusement de manière étanche à l'eau liquide (présente à l'extérieur 7 du carter 3) et au lubrifiant (contenu dans la chambre 5).

Tel que cela est visible sur la figure 4, le bouchon 1 comprend un moyeu 10, qui s'étend selon un axe central (XX').

En pratique, ledit axe central (XX'), ou « axe principal », coïncide sensiblement avec la direction selon laquelle on enfonce le bouchon 1 dans l'orifice d'accès 6, c'est-à-dire est sensiblement confondu avec l'axe de perçage dudit orifice d'accès 6.

Par commodité de description, on désignera par « axiale » une direction ou une dimension considérée selon une orientation parallèle à l'axe central (XX'), voire confondue avec ledit axe central (XX'), et par « radiale » une direction ou une dimension considérée selon une orientation transverse, et plus particulièrement perpendiculaire, audit axe central (XX').

On notera PS le plan sagittal du moyeu 10, et plus globalement le plan sagittal du bouchon 1, qui contient l'axe central (XX'). Ce plan sagittal PS divise (fictivement) le bouchon 1 en deux hémi-cylindres, de préférence sensiblement symétriques.

Le moyeu 10 est délimité radialement, autour dudit axe central (XX'), par une paroi latérale 10L dans laquelle est creusée une gorge 11 annulaire qui entoure l'axe central (XX') et qui est destinée à recevoir un organe d'étanchéité 12.

A ce titre, on notera que le procédé comprend une étape (d) de montage d'organe d'étanchéité 12, au cours de laquelle, de préférence après avoir formé le moyeu 10 et la gorge 11 du bouchon, on enfile sur le moyeu 10, et l'on engage dans la gorge 11, un organe d'étanchéité 12 annulaire.

L'organe d'étanchéité 12 sera avantageusement formé dans un matériau souple (compressible), distinct du matériau rigide constitutif du moyeu 10, et plus souple que ce dernier.

De préférence, l'organe d'étanchéité sera formé dans un matériau élastomère, tel qu'un copolymère butadiène-acrylonitrile hydrogéné, aussi appelé « caoutchouc nitrile hydrogéné » (en abrégé « HNBR », pour « hydrogenated nitrile butadiene rubber »), ou bien un copolymère butadiène-acrylonitrile, aussi appelé « caoutchouc nitrile » (en agrégé « NBR », pour « nitrile butadiene rubber »).

L'organe d'étanchéité 12 pourra par ailleurs être formé par tout type d'anneau élastique approprié, présentant un contour fermé sur lui-même autour de l'axe central (XX').

En particulier, l'organe d'étanchéité 12 pourra présenter au repos toute forme de section transverse appropriée, telle qu'une section circulaire (joint torique), une section ovoïde, une section rectangulaire (joint formant une bande « plate »), etc.

Selon une variante préférentielle de réalisation, particulièrement peu onéreuse à mettre en œuvre, l'organe d'étanchéité 12 sera formé, tel que cela est illustré sur la figure 4, par un joint de type joint torique.

Tel que cela est visible sur les figures 3 et 4, la gorge 11 est comprise entre d'une part une paroi de fond 13, qui forme, radialement à l'axe central (XX'), le fond de ladite gorge 11, et d'autre part une première paroi de bord 14, annulaire, et une seconde paroi de bord 15, annulaire, lesdites première et seconde parois de bord 14, 15 délimitant axialement ladite gorge 11 le long de l'axe central (XX').

La gorge 11 s'étend ainsi axialement depuis la première paroi de bord 14 jusqu'à la seconde paroi de bord 15, de telle sorte que lesdites première et seconde parois de bord 14, 15 assurent, de chaque côté de la gorge 11, la retenue axiale (bidirectionnelle) de l'organe d'étanchéité 12, afin d'empêcher le glissement axial incontrôlé dudit organe d'étanchéité 12.

De préférence, par commodité de fabrication et pour garantir un maintien axial efficace de l'organe d'étanchéité 12, la première paroi de bord 14, ainsi que la seconde paroi de bord 15, s'étendent sensiblement dans des plans perpendiculaires (normaux) à l'axe central (XX').

Selon l'invention, et tel que cela est visible sur les figures 1 à 3, le procédé comporte une étape (a) de fabrication d'un premier tronçon de moyeu 10.1, au cours de laquelle on réalise un premier tronçon de moyeu 10.1, qui s'étend selon une première portion de l'axe central (XX') et sur lequel est formée la première paroi de bord 14.

Le premier tronçon de moyeu 10.1 présentera ainsi une forme cylindrique, et plus préférentiellement sensiblement une forme de révolution, centrée sur l'axe central (XX').

De même, le procédé comporte également une étape (b) de fabrication d'un second tronçon de moyeu 10.2, au cours de laquelle on réalise un second tronçon de moyeu 10.2 (initialement distinct du premier tronçon de moyeu 10.1), qui s'étend selon une seconde portion de l'axe central et sur lequel est formée la seconde paroi de bord 15.

Le second tronçon de moyeu 10.2 présentera ainsi (également) une forme cylindrique, et plus préférentiellement sensiblement une forme de révolution, centrée sur l'axe central (XX').

Le procédé comporte ensuite une étape (c) de constitution de moyeu 10, au cours de laquelle on assemble le premier tronçon de moyeu 10.1 avec le second tronçon de moyeu 10.2, afin de créer la gorge 11 annulaire entre la première paroi de bord 14 et la seconde paroi de bord 15, et de telle manière que le premier tronçon de moyeu 10.1 et le second tronçon de moyeu 10.2 se joignent selon un plan de joint P0 qui est sécant à l'axe central (XX'), c'est-à-dire non parallèle audit axe central (XX'), et qui est sécant à la paroi de fond 13 de la gorge 11, et plus particulièrement sécant à la paroi de fond 13 sur toute la circonférence de ladite paroi de fond 13.

De la sorte, une fois le moyeu 10 assemblé, le tracé apparent de la jonction entre le premier tronçon de moyeu 10.1 et le second tronçon de moyeu 10.2, telle que cette jonction apparaît depuis l'extérieur du bouchon 1 sur la paroi latérale 10L visible du moyeu 10, et plus particulièrement le tracé de l'intersection 16 du plan de joint P0 avec ladite paroi de fond 13, est axialement contenu entre la première paroi de bord 14 et la seconde paroi de bord 15 sur tout le périmètre de la gorge 11 annulaire (c'est-à-dire sur tout le pourtour de ladite gorge 11, à 360 degrés autour de l'axe central (XX')).

En d'autres termes, le plan de joint P0 "débouche" radialement, au niveau de la paroi latérale 10L (externe) du moyeu 10, et sur toute la circonférence de ladite paroi latérale 10L autour de l'axe central (XX'), à une abscisse axiale (ou éventuellement à des abscisses axiales qui peuvent être différentes selon l'azimut considéré, si le plan de joint P0 n'est pas exactement normal à l'axe central (XX')) qui est (sont) comprise(s) dans la plage d'abscisses axiales délimitée par l'abscisse axiale de la première paroi de bord 14 d'une part et l'abscisse axiale de la seconde paroi de bord 15 d'autre part.

Avantageusement, le fait de subdiviser axialement, selon le plan de joint P0, le moyeu 10 en deux tronçons de moyeu 10.1, 10.2 empilés axialement l'un sur l'autre permet, tel que cela a été indiqué plus haut, d'offrir à l'organe d'étanchéité 12, au niveau de la surface apparente (radialement centrifuge) de la paroi latérale 10L du moyeu 10, et plus particulièrement au niveau de la surface apparente (radialement centrifuge) de la paroi de fond 13, une ou des surfaces d'appui véritablement annulaires, car continues, et parfaitement lisses, sans décrochement radial, et notamment sans bavure ni décalage radial qui serait susceptible d'écarter localement de la paroi latérale 10L, et plus particulièrement d'écarter de la paroi de fond 13 de la gorge 11, la face radialement interne (centripète) de l'organe d'étanchéité 12 qui est censée épouser ladite paroi 10L, 13.

En effet, d'un même côté (axial) du plan de joint P0, et donc d'un même côté (axial) de l'intersection 16, la surface apparente de la paroi latérale 10L du moyeu, et plus particulièrement la surface apparente de la paroi de fond 13, sera ainsi formée d'un seul bloc, de forme régulière et continue, sans être coupée par le plan de joint P0, et donc sans risque d'être affectée par une bavure ou par un décalage des empreintes d'un moule d'injection.

Tel que cela est visible sur les figures 1, 3 et 4, le dos 10.1B du premier tronçon de moyeu 10.1 formera une première face d'accouplement 10.1B, destinée à être rapprochée axialement de, et appliquée contre, une seconde face d'accouplement 10.2A de forme sensiblement conjuguée qui correspond à la face avant 10.2A du second tronçon de moyeu 10.2.

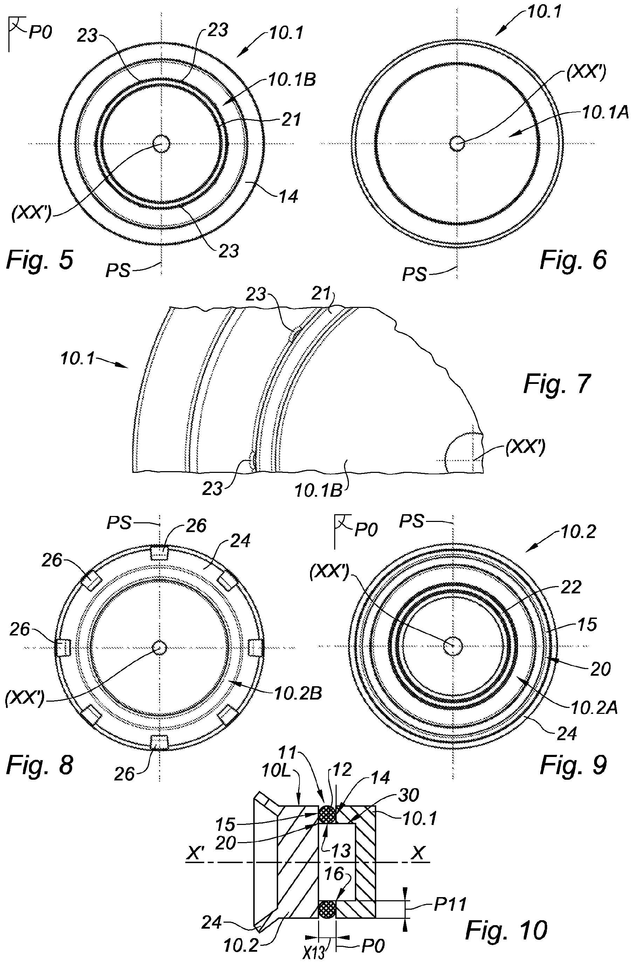

Par analogie et par commodité de description, on notera 10.1A la face avant du premier tronçon de moyeu 10.1, représentée notamment sur la figure 6 et située axialement à l'opposé de la première face d'accouplement 10.1B, et 10.2B le dos du second tronçon de moyeu 10.2, représenté notamment sur la figure 8 et situé axialement à l'opposé à la seconde face d'accouplement 10.2A.

La première face d'accouplement 10.1B portera une première portion de la gorge 11 annulaire, en l'espèce au moins la première paroi de bord 14, tandis que la seconde face d'accouplement 10.2A portera une seconde portion de la gorge 11 (complémentaire de la première portion), en l'espèce au moins la seconde paroi de bord 15, voire, de préférence, à la fois la paroi de fond 13 et la seconde paroi de bord 15.

A ce titre, selon l'invention, la paroi de fond 13 est de préférence très majoritairement portée, et de façon plus préférentielle entièrement portée, par un seul et même tronçon de moyeu 10.1, 10.2, ici le second tronçon de moyeu 10.2 sur les figures 3 et 4.

Au sein du tronçon de moyeu 10.1, 10.2 concerné, ici le second tronçon de moyeu 10.2, et tel que cela est bien visible sur les figures 3 et 4, ladite paroi de fond 13 forme alors, d'un seul tenant avec la paroi de bord 14, 15 portée par ce même tronçon de moyeu, ici d'un seul tenant avec la seconde paroi de bord 15 portée par le second tronçon de moyeu 10.2, un épaulement 20.

Par l'expression « très majoritairement portée par un seul et même tronçon de moyeu », on indique que l'étendue axiale de la portion de la paroi de fond 13 de la gorge 11 portée spécifiquement (et donc formée d'un seul bloc, non interrompu) par le tronçon de moyeu concerné, ici le second tronçon de moyeu 10.2, correspond de préférence à plus de 75%, de préférence à plus de 80%, voire sensiblement à 100% (c'est-à-dire à la totalité) de l'étendue axiale totale (apparente) X13 de la paroi de fond 13, c'est-à-dire de la distance qui sépare axialement la première paroi de bord 14 de la seconde paroi de bord 15 une fois les tronçons de moyeu 10.1, 10.2 assemblés l'un sur l'autre.

Selon une première variante de réalisation (non représentée), la paroi de fond 13 de la gorge 11 pourra être répartie axialement pour une première partie sur le premier tronçon de moyeu 10.1 et pour l'autre, seconde, partie sur le second tronçon de moyeu 10.2, par exemple de telle sorte que le second tronçon de moyeu 10.2 porte (axialement) entre 75 %, voire 80 % et 95 % de la paroi de fond 13, raccordée à la seconde paroi de bord 15, tandis que le premier tronçon de moyeu 10.1 porte la longueur axiale complémentaire, soient entre 5 % et 20 %, voire 25 % (au plus), de la paroi de fond 13, raccordée à la première paroi de bord 14.

La jonction des tronçons de moyeu 10.1, 10.2 s'opérera alors par le fond de la gorge 11, c'est-à-dire que l'intersection 16 sera située axialement dans une portion intermédiaire de la gorge 11, à distance axiale de chacune des parois de bord 14,15.

Bien entendu, quelle que soit la répartition retenue pour la paroi de fond 13, on veillera à ce que ladite paroi de fond 13 présente sur un seul et même tronçon de moyeu 10.1, 10.2 au moins une portion sans jonction (c'est-à-dire non coupée par l'intersection 16 avec le plan de joint P0), ladite portion sans jonction correspondant ici à la seconde partie susmentionnée, dont l'étendue axiale sera strictement supérieure à l'étendue axiale nécessaire pour fournir une assise annulaire lisse à l'organe d'étanchéité 12, et ce afin d'éviter de créer la moindre irrégularité de surface, et notamment le moindre décrochement radial ou le moindre creux à l'aplomb radial de l'organe d'étanchéité 12.

En d'autres termes, aucune éventuelle ligne apparente de raccord des tronçons de moyeu 10.1, 10.2 (c'est-à-dire aucune intersection 16) ne passera sous l'organe d'étanchéité 12 ou ne croisera ledit organe d'étanchéité 12.

A titre indicatif, au moins la seconde partie, c'est-à-dire la plus grande partie, de la paroi de fond 13 pourra présenter une étendue axiale égale ou supérieure à 75 %, à 80 %, voire à 100 % ou même 110 % de l'étendue axiale prévisible de la section droite de l'organe d'étanchéité 12, c'est-à-dire en pratique une étendue axiale égale ou supérieure à 75 %, à 80 %, voire à 100 % ou même 110 % du diamètre de la section transverse circulaire du joint torique 12.

Selon une seconde variante de réalisation, et tel que cela est illustré sur la figure 4 ou sur la figure 10, l'intégralité, c'est-à-dire 100 %, de la paroi de fond 13, et plus particulièrement 100 % de l'étendue axiale X13 utile de ladite paroi de fond 13, est portée par un seul et même tronçon de moyeu, ici le second tronçon de moyeu 10.2.

Selon une telle variante, l'intersection 16 entre le plan de joint P0 et la paroi de fond 13 se situe à l'aplomb radial (c'est-à-dire dans le prolongement radial) de la paroi de bord correspondante, ici la première paroi de bord 14 sur les figures 4 et 10.

Avantageusement, selon cette seconde variante de réalisation, il suffit à l'autre tronçon de moyeu (ici le premier tronçon de moyeu 10.1) de porter simplement la (première) paroi de bord 14 qui est nécessaire et suffisante pour compléter la délimitation de la gorge 11.

Un tel agencement permet de simplifier non seulement la fabrication du premier tronçon de moyeu 10.1, mais également l'assemblage des deux tronçons de moyeu 10.1, 10.2, puisqu'il suffit de former, dans le premier tronçon de moyeu 10.1, une première paroi de bord 14 plane, sous la forme d'un disque plat (ici perpendiculaire à l'axe central (XX')), puis de coiffer le second tronçon de moyeu 10.2 avec ledit premier tronçon de moyeu 10.1, à la manière d'un couvercle, pour recouvrir axialement l'épaulement 20.

Selon une première sous-variante de cette seconde variante, qui correspond aux figures 3 et 4, la première paroi de bord 14 du premier tronçon de moyeu 10.1, qui est de préférence confondue avec le plan de joint P0, est posée "à plat" contre le chant du second tronçon de moyeu 10.2, c'est-à-dire que ladite première paroi de bord 14 vient s'accoler de façon tangente à l'extrémité axiale de la paroi de fond 13, l'aboutement axial du premier tronçon de moyeu 10.1 en butée contre le second tronçon de moyeu 10.2 s'opérant exactement selon l'intersection 16 (visible de l'extérieur du bouchon 1).

On évite ainsi tout risque de décalage, ou bien de subsistance d'une bavure ou d'un autre défaut au niveau de ladite intersection 16, et plus globalement à la surface fonctionnelle de la paroi de fond 13, située dans la plage d'abscisses occupée par l'organe d'étanchéité 12.

Selon une seconde sous-variante, qui correspond à la figure 10, le premier tronçon de moyeu 10.1 pourra former un élément femelle dans lequel sera creusé un alésage 30 dans lequel la paroi de fond 13 de gorge du second tronçon de moyeu 10.2 vient s'emboîter, de préférence selon un ajustement serré.

Selon une telle sous-variante, l'alésage 30, et donc le premier tronçon de moyeu 10.1, chevauche axialement la paroi de fond 13, qui se trouve ainsi partiellement recouverte par ledit premier tronçon de moyeu 10.1.

La mise en butée axiale du premier tronçon de moyeu 10.1 contre le second tronçon de moyeu 10.2 s'effectuera alors de préférence par le fond de l'alésage 30 venant en appui contre le chant de la paroi de fond 13, en retrait axial (vers l'intérieur du premier tronçon de moyeu 10.1) par rapport à la première paroi de bord 14 portée par ledit premier tronçon de moyeu 10.1.

En tout état de cause, ici encore, le raccordement apparent entre le premier tronçon de moyeu 10.1 et le second tronçon de moyeu 10.2, c'est-à-dire l'intersection 16, se trouvera à l'aplomb radial de la première paroi de bord 14, à la limite de la paroi de fond apparente résiduelle (c'est-à-dire à la limite de la portion de paroi de fond 13 non recouverte par le premier tronçon de moyeu 10.1), sans risque d'interférer avec l'assise de l'organe d'étanchéité 12.

Avantageusement, dans tous les cas, quelle que soit la sous-variante envisagée, la portion de la paroi de fond 13 réalisée d'un seul tenant, et donc sans aspérité, présente une surface particulièrement étendue, et offre donc à l'organe d'étanchéité 12 un siège lisse suffisamment large axialement pour éviter tout défaut d'étanchéité.

Plus globalement, quelle que soit la variante de réalisation envisagée, la portion de la paroi de fond 13 sur laquelle repose et s'étale l'organe d'étanchéité 12 est lisse, régulière, et dépourvue de raccord, le plan de joint P0, et plus particulièrement l'intersection 16, ne croisant pas l'organe d'étanchéité 12.

Bien entendu, une fois la gorge 11 formée (reconstituée) par la réunion des premier et second tronçons de moyeu 10.1, 10.2, on peut, lors de l'étape (d), enfiler l'organe d'étanchéité 12 sur le moyeu 10, et le faire glisser axialement le long de ce dernier, jusqu'à introduire ledit organe d'étanchéité 12 dans la gorge 11, en butée axiale entre les parois de bord 14, 15.

Ceci étant, on pourrait également, dans l'absolu, engager l'organe d'étanchéité 12 dans l'épaulement 20 (du second tronçon de moyeu 10.2), avant de rapporter le premier tronçon 10.1 sur le second tronçon de moyeu 10.2, à condition toutefois de veiller à ne pas risquer de pincer l'organe d'étanchéité 12 lors de la mise en place du premier tronçon de moyeu 10.1 sur le second tronçon de moyeu 10.2.

Par ailleurs, il n'est pas exclu d'envisager, dans l'absolu, un plan de joint P0 oblique par rapport à l'axe central (XX').

Toutefois, en considérant par convention l'axe central (XX') comme axe de lacet, l'assiette du plan de joint P0 (c'est-à-dire l'inclinaison en tangage et/ou en roulis dudit plan de joint P0) restera de préférence faible, l'angle de tangage et l'angle de roulis du plan de joint P0 par rapport à l'axe central (XX') étant inférieurs à 30 degrés, à 20 degrés, à 10 degrés, voire plus préférentiellement inférieurs à 5 degrés.

De façon particulièrement préférentielle, le plan de joint P0 sera perpendiculaire (normal) à l'axe central (XX'), c'est-à-dire présentera un angle de tangage et un angle de roulis nuls.

Avantageusement, un tel agencement sera parfaitement adapté à une découpe "nette" de la forme de révolution du moyeu 10, et plus particulièrement de la paroi de fond 13, à une seule abscisse le long de l'axe central (XX').

Tout d'abord, un plan de joint P0 perpendiculaire à l'axe central (XX') favorisera la réalisation d'un seul tenant d'une paroi de fond 13 de gorge 11 présentant une importante étendue axiale, et donc une portée axiale suffisante pour que ladite paroi de fond 13, formée d'un seul tenant, puisse soutenir à elle seule l'organe d'étanchéité 12.

Ensuite, cela facilitera la fabrication individuelle des tronçons de moyeu 10.1, 10.2 et permettra notamment de conférer au premier tronçon de moyeu 10.1 et au second tronçon de moyeu des formes de révolution, et plus particulièrement des faces d'accouplement 10.1B et 10.2A invariantes par rotation, ce qui autorisera l'assemblage desdits premier et second tronçons de moyeu 10.1, 10.2 l'un à l'autre quelle que soit l'orientation en lacet de chacun desdits tronçons de moyeu 10.1, 10.2.

On pourra donc assembler "en aveugle" lesdits premiers tronçons de moyeu 10.1, 10.2, sans avoir à prendre de repère angulaire pour positionner un tronçon par rapport à l'autre.

De préférence, le premier tronçon de moyeu 10.1 et/ou le second tronçon de moyeu 10.2 sera formé d'un seul tenant en matériau polymère (rigide).

L'usage d'un polymère permet avantageusement d'allier légèreté, étanchéité intrinsèque, résistance à la corrosion, et faible coût d'approvisionnement.

Le polymère choisi sera de préférence un thermoplastique.

Ledit polymère sera avantageusement capable de résister, et notamment de conserver une rigidité suffisante, sur toute la plage de températures de fonctionnement prévisible du système de protection 2, et notamment sur toute la plage comprise entre -30°C et +125°C, voire entre -40°C et +135°C dans le cas où le système de protection 2 concerne un dispositif de direction (assistée) de véhicule.

A titre indicatif, la limite à la rupture dudit polymère pourra être égale ou supérieure à 40 MPa sur toute la plage de températures susmentionnée.

De façon particulièrement préférentielle, le premier tronçon de moyeu 10.1 et/ou le second tronçon de moyeu 10.2 sera formé par moulage par injection.

On pourra ainsi produire le bouchon 1 à moindre coût, de façon rapide et en grande série.

De préférence, lors de l'étape (a) de fabrication du premier tronçon de moyeu, on forme sur ledit premier tronçon de moyeu 10.1 une couronne d'accouplement 21 saillante, centrée sur l'axe central (XX'), tel que cela est illustré sur les figures 1, 3, 4 et 5.

Ladite couronne d'accouplement 21 formera une sorte de tube en saillie axiale sur la première face d'accouplement 10.1B, et en saillie axiale par rapport au plan de joint P0, en direction du second tronçon de moyeu 10.2.

Lors de l'étape (b) de fabrication du second tronçon de moyeu, on ménage alors dans le second tronçon de moyeu 10.2 une rainure d'accouplement 22 de forme sensiblement conjuguée à celle de la couronne d'accouplement 21, tel que cela est illustré sur les figures 2, 3 et 4.

En l'espèce, ladite rainure d'accouplement 22 est creusée dans la seconde face d'accouplement 10.2A, en retrait axial du plan de joint P0 par rapport au premier tronçon de moyeu 10.1

On peut alors avantageusement, lors de l'étape (c) de constitution de moyeu 10, emboîter axialement la couronne d'accouplement 21 dans la rainure d'accouplement 22.

L'assemblage du moyeu 10 pourra ainsi avantageusement être opéré, quel que soit par ailleurs l'agencement choisi pour les organes d'accouplement 21, 22, par emboîtement (élastique) serré.

Quelle que soit la façon dont le premier tronçon de moyeu 10.1 et le second tronçon de moyeu 10.2 sont aboutés, le cas échéant emboîtés, et de préférence maintenus fixement l'un à l'autre, l'assemblage desdits tronçons de moyeu 10.1, 10.2 pourra être renforcé par collage, ou par thermosoudage, par exemple par soudage par friction (rotative) par soudage par ultrasons, ou par soudage par infrarouge.

Avantageusement, l'utilisation d'un contact de type cylindre/cylindre (couronne 21 dans rainure 22 sur les figures 3 et 4, ou bien paroi de fond 13 dans alésage 30 sur figure 10) procure un effet auto-centreur, qui aligne automatiquement les deux tronçons de moyeu 10.1, 10.2 l'un par rapport à l'autre lors de l'assemblage, et évite ainsi tout décalage radial entre ces deux éléments.

De préférence, tel que cela est notamment visible sur les figures 1 et 7, la couronne d'accouplement 21 est pourvue d'ergots 23 radialement saillants, permettant le serrage automatique de ladite couronne d'accouplement 21 dans la rainure d'accouplement 22.

De préférence, les ergots 23 feront saillie sur (toute) la hauteur axiale la couronne d'accouplement 21, et préférentiellement de façon centrifuge, sur la face radialement externe de ladite couronne d'accouplement 21.

Bien entendu, en variante, on pourrait par exemple prévoir des ergots 23 en saillie sur la face radialement interne, ou bien sur les deux faces, radialement interne et radialement externe, de la couronne d'accouplement 21.

Les ergots 23, dont le nombre pourra par exemple être compris entre trois et douze, seront de préférence équi-répartis en azimut (en lacet) autour de l'axe central (XX'), tant par commodité de fabrication que pour équilibrer le centrage du premier tronçon de moyeu 10.1 par rapport au second tronçon de moyeu 10.2 lors de l'assemblage en force par emboîtement.

La surépaisseur locale de la couronne d'accouplement 21 procurée par les ergots 23 permettra d'obtenir un serrage (coincement) efficace de ladite couronne 21 dans la rainure d'accouplement 22, tout en accommodant les éventuelles variations de dimensions liées aux tolérances de fabrication, et notamment en rattrapant les jeux radiaux éventuels, sans risque de faire éclater la rainure d'accouplement 22 par effet de coin.

Par ailleurs, le bouchon 1 pourra être maintenu fixé dans l'orifice d'accès 6 par tout organe de fixation approprié, ménagé sur l'un ou l'autre des tronçons de moyeu 10.1, 10.2.

Ainsi, par exemple, on pourra prévoir, sur la paroi latérale 10L du moyeu, un organe de fixation de type filet permettant le vissage du bouchon 1 dans une portion taraudée de l'orifice d'accès 6.

Toutefois, selon une variante de réalisation préférentielle, et tel que cela est notamment visible sur les figures 1, 4 et 8, et 10, le second tronçon de moyeu 10.2 est pourvu (de préférence d'un seul tenant) d'une collerette de fixation 24, agencée pour coopérer par encliquetage avec la paroi d'un orifice d'accès 6 conçu pour recevoir le bouchon 1.

De préférence, la collerette 24 présente une forme tronconique, centrée sur l'axe central (XX'), et qui va en s'évasant dans la direction opposée à celle du premier tronçon de moyeu 10.1.

Avantageusement, l'utilisation d'un organe de fixation de type collerette 24 élastique permet une fixation rapide et simple du bouchon 1 à l'intérieur même de l'orifice d'accès 6, contre un rebord 25 dudit orifice d'accès 6 placé en retrait de la surface apparente de la paroi de carter 4, ce qui permet de loger le bouchon 1 intégralement en retrait de ladite surface apparente (extérieure) de la paroi de carter 4, vers l'intérieur de la chambre 5, et évite ainsi tout arrachement accidentel du bouchon 1 par un obstacle ou un outil se trouvant l'extérieur 7 du carter.

Selon une caractéristique préférentielle qui peut constituer une invention à part entière, et ce que le moyeu 10, et plus globalement le bouchon 1, soit formé en une seule partie ou bien au contraire par un assemblage de tronçons de moyeu 10.1, 10.2 selon l'invention, la collerette de fixation 24 est pourvue, de préférence sur sa face radialement interne (centripète), orientée vers l'axe central (XX'), d'évidements 26 non traversant qui réduisent localement l'épaisseur E24 de ladite collerette de fixation 24 afin d'en améliorer la flexibilité.

De tels évidements 26 sont de préférence au nombre de six à douze, et par exemple au nombre de huit (figure 8), et préférentiellement équi-répartis en lacet autour de l'axe central (XX') afin d'homogénéiser la capacité de déformation élastique de la collerette 24 sur tout son pourtour.

Lesdits évidements 26 se présentent de préférence sous la forme d'enfoncements, de toute forme compatible avec un démoulage axial de la collerette, et plus globalement compatible avec un démoulage axial du second tronçon de moyeu 10.2, afin de faciliter la fabrication dudit second tronçon de moyeu 10.2.

Ainsi, les évidements 26 pourront présenter par exemple une forme rectangulaire, avec des angles de dépouille adaptés, qui s'ouvre sur l'extrémité axiale libre de la collerette (du côté de la base large de ladite collerette).

Bien entendu, l'invention concerne également en tant que tel un bouchon 1 obtenu par un procédé selon l'une ou l'autre des caractéristiques décrites dans ce qui précède.

Comme indiqué plus haut, un tel bouchon 1 sera de préférence apte à supporter des températures de fonctionnement qui s'étendent au moins de -30°C à +125°C, voire de -40°C à +135°C.

A titre indicatif, le diamètre hors-tout D1 du bouchon 1 (figure 4), qui correspond ici au diamètre de la base large (extrémité libre) de la collerette 24, sera de préférence sensiblement compris entre 20 mm et 130 mm, et, dans le cas d'un exemple préférentiel, correspondant notamment aux figures 3 et 4, de l'ordre de 37 mm.

Le diamètre hors-tout D10L de la paroi latérale 10L du moyeu (lequel correspond, au jeu de guidage près, au diamètre de l'alésage de l'orifice d'accès 6) est de préférence compris entre 20 mm et 130 mm, et notamment 35 mm dans l'exemple susmentionné.

La profondeur P11 de la gorge 11, c'est-à-dire la distance radiale entre la paroi latérale 10L hors-tout et la paroi de fond 13, sera de préférence comprise entre 1 mm et 3 mm, et notamment 1,25 mm dans l'exemple susmentionné.

L'étendue axiale hors-tout X10.1 (figure 3) du premier tronçon de moyeu 10.1 sera de préférence comprise entre 3 mm et 10 mm (3 mm dans l'exemple ci-dessus), tandis que l'étendue axiale hors-tout X10.2 du second tronçon de moyeu sera de préférence comprise entre 4 mm et 15 mm (le premier tronçon de moyeu 10.1 étant plus fin que le second tronçon de moyeu 10.2), et notamment de 5,6 mm dans l'exemple ci-dessus.

L'étendue axiale hors-tout X1 (figure 4) du bouchon 1 sera de préférence comprise entre 4 mm et 15 mm, notamment de 6,3 mm dans l'exemple susmentionné, et sera de préférence inférieure à la somme des étendues axiales individuelles propres à chaque tronçon de moyeu 10.1, 10.2, en raison du chevauchement axial partiel du premier tronçon de moyeu 10.1 et du second tronçon de moyeu 10.2, notamment au niveau de l'interface entre la couronne d'accouplement 21 et la rainure d'accouplement 22 ou entre l'alésage 30 et la paroi de fond 13.

L'invention concerne également en tant que telle l'utilisation d'un bouchon 1 selon l'invention pour obturer l'orifice d'accès 6 d'un carter 3 de direction appartenant à un dispositif de direction, notamment un dispositif de direction assistée.

L'invention concerne enfin un dispositif de direction pour véhicule comprenant au moins un mécanisme de direction, tel qu'un réducteur à engrenage, qui est logé dans un carter 3 de direction présentant une paroi de carter 4 percée d'au moins un orifice accès 6 qui est obturé par un bouchon 1, ledit bouchon 1 comprenant un moyeu 10 qui s'étend selon un axe central (XX'), coïncidant sensiblement avec l'axe central de l'orifice d'accès 6, et ledit moyeu 10 étant délimité radialement, autour dudit axe central (XX'), par une paroi latérale 10L dans laquelle est creusée une gorge 11 annulaire qui entoure l'axe central (XX') et qui reçoit un organe d'étanchéité 12 venant au contact de la paroi du carter 4, ladite gorge 11 étant comprise entre d'une part une paroi de fond 13, qui forme, radialement à l'axe central (XX'), le fond de ladite gorge 11, et d'autre part une première paroi de bord 14, annulaire, et une seconde paroi de bord 15, annulaire, qui délimitent axialement ladite gorge 11 le long de l'axe central (XX'), le moyeu 10 du bouchon 1 (et plus globalement le bouchon 1 dans son ensemble) étant formé par la réunion d'un premier tronçon de moyeu 10.1 qui s'étend selon une première portion de l'axe central (XX') et sur lequel est formée la première paroi de bord 14, et d'un second tronçon de moyeu 10.2, qui s'étend selon une seconde portion de l'axe central (XX') et sur lequel est formée la seconde paroi de bord 15, le premier tronçon de moyeu 10.1 et le second tronçon de moyeu 10.2 étant assemblés l'un à l'autre de telle manière que le premier tronçon de moyeu et le second tronçon de moyeu se joignent selon un plan de joint P0 qui est sécant à l'axe central (XX') et qui est sécant à la paroi de fond 13 de la gorge.

Ainsi, le tracé de l'intersection (apparente) 16 dudit plan de joint P0 avec ladite paroi de fond 13 est axialement contenu entre la première paroi de bord 14 et la seconde paroi de bord 15 sur tout le périmètre de la gorge 11 annulaire.

Avantageusement, l'invention permet donc de réaliser un bouchon 1 particulièrement simple à partir de seulement trois pièces distinctes, enfilées les unes sur les autres, à savoir : un premier tronçon de moyeu 10.1, un second tronçon de moyeu 10.2, et un organe d'étanchéité 12.

On notera également que le choix de combiner une fabrication séparée des tronçons de moyeu 10.1, 10.2 et un assemblage jointif desdits tronçons de moyeu l'un contre l'autre selon un plan de joint P0 qui est sécant, et plus particulièrement normal, à l'axe central (XX'), offre plusieurs avantages.

Une telle combinaison permet d'une part, comme il a été dit plus haut, de réaliser tout d'abord facilement par moulage des tronçons de moyeu 10.1, 10.2 qui présentent chacun initialement une forme facilement démoulable selon l'axe central (XX'), et qui plus est une forme de révolution qui procure une paroi de fond de gorge 13 lisse, dépourvue d'aspérité susceptible de nuire à l'étanchéité, puis d'obtenir, après assemblage des deux tronçons de moyeu, une gorge 11 délimitée par deux parois de bord 14, 15 (c'est-à-dire une forme qui serait en elle-même non démoulable selon l'axe central (XX')) assurant une retenue bidirectionnelle de l'organe d'étanchéité 12, de part et d'autre dudit organe d'étanchéité.

Une telle combinaison permet d'autre part de détecter tôt les éventuels défauts de fabrication des tronçons de moyeu 10.1, 10.2 et ainsi de limiter le gaspillage en cas de mise au rebut, car seul le tronçon de moyeu défectueux sera mis au rebut, et non le bouchon 1 dans son ensemble.

Une telle combinaison permet enfin de réaliser un assemblage simple du moyeu 10, de préférence par emboîtement auto-centrant des tronçons de moyeu, sans qu'il soit notamment nécessaire de prévoir un outillage complexe et onéreux pour positionner et maintenir précisément un tronçon de moyeu 10.1 par rapport à l'autre 10.2.

## Revendications

1. Procédé de fabrication d'un bouchon (1) comprenant un moyeu (10) qui s'étend selon un axe central (XX') et qui est délimité radialement, autour dudit axe central (XX'), par une paroi latérale (10L) dans laquelle est creusée une gorge (11) annulaire qui entoure l'axe central (XX') et qui est destinée à recevoir un organe d'étanchéité (12), ladite gorge étant comprise entre d'une part une paroi de fond (13), qui forme, radialement à l'axe central (XX'), le fond de ladite gorge (11), et d'autre part une première paroi de bord (14), annulaire, et une seconde paroi de bord (15), annulaire, qui délimitent axialement ladite gorge (11) le long de l'axe central (XX'), ledit procédé étant **caractérisé en ce qu'**il comporte une étape (a) de fabrication d'un premier tronçon de moyeu, au cours de laquelle on réalise un premier tronçon de moyeu (10.1), qui s'étend selon une première portion de l'axe central et sur lequel est formée la première paroi de bord (14), une étape (b) de fabrication d'un second tronçon de moyeu, au cours de laquelle on réalise séparément un second tronçon de moyeu (10.2), distinct du premier tronçon de moyeu (10.1), et qui s'étend selon une seconde portion de l'axe central et sur lequel est formée la seconde paroi de bord (15), puis une étape (c) de constitution de moyeu (10), au cours de laquelle on assemble le premier tronçon de moyeu (10.1) avec le second tronçon de moyeu (10.2), afin de créer la gorge (11) annulaire entre la première paroi de bord (14) et la seconde paroi de bord (15), et de telle manière que le premier tronçon de moyeu (10.1) et le second tronçon de moyeu (10.2) se joignent selon un plan de joint (P0) qui est sécant à l'axe central (XX') et qui est sécant à la paroi de fond (13) de la gorge (11).

2. Procédé de fabrication selon la revendication 1 **caractérisé en ce que** le plan de joint (P0) est perpendiculaire à l'axe central (XX').

3. Procédé de fabrication selon la revendication 1 ou 2 **caractérisé en ce que** la paroi de fond (13) est majoritairement, et de préférence entièrement, portée par le second tronçon de moyeu (10.2), au sein duquel ladite paroi de fond (13) forme, d'un seul tenant avec la seconde paroi de bord (15), un épaulement (20).

4. Procédé de fabrication selon l'une des revendications précédentes **caractérisé en ce que** l'assemblage du premier tronçon de moyeu (10.1) avec le second tronçon de moyeu (10.2) est opéré par emboîtement serré.

5. Procédé de fabrication selon l'une des revendications précédentes **caractérisé en ce que**, lors de l'étape (a) de fabrication du premier tronçon de moyeu, on forme sur ledit premier tronçon de moyeu (10.1) une couronne d'accouplement (21) saillante, centrée sur l'axe central (XX'), **en ce que**, lors de l'étape (b) de fabrication du second tronçon de moyeu, on ménage dans le second tronçon de moyeu (10.2) une rainure d'accouplement (22) de forme sensiblement conjuguée à celle de la couronne d'accouplement (21), et **en ce que**, lors de l'étape (c) de constitution de moyeu, on emboîte axialement la couronne d'accouplement (21) dans la rainure d'accouplement (22).

6. Procédé de fabrication selon la revendication 5 **caractérisé en ce que** la couronne d'accouplement (21) est pourvue d'ergots (23) radialement saillants, permettant le serrage automatique de ladite couronne d'accouplement (21) dans la rainure d'accouplement (22).

7. Procédé de fabrication selon l'une des revendications précédentes **caractérisé en ce que** le second tronçon de moyeu (10.2) est pourvu d'une collerette de fixation (24), agencée pour coopérer par encliquetage avec la paroi d'un orifice d'accès (6) conçu pour recevoir le bouchon (1).

8. Procédé de fabrication selon la revendication 7 **caractérisé en ce que** la collerette de fixation (24) est pourvue, de préférence sur sa face radialement interne, orientée vers l'axe central (XX'), d'évidements (26) non traversant qui réduisent localement l'épaisseur de ladite collerette de fixation (24) afin d'en améliorer la flexibilité.

9. Procédé de fabrication selon l'une des revendications précédentes **caractérisé en ce que** le premier tronçon de moyeu (10.1) et/ou le second tronçon de moyeu (10.2) est formé d'un seul tenant en matériau polymère, de préférence par moulage par injection.

10. Procédé de fabrication selon l'une des revendications précédentes **caractérisé en ce que** le premier tronçon de moyeu (10.1) et le second tronçon de moyeu (10.2) sont formés chacun en matériau polymère rigide, tandis que l'organe d'étanchéité (12) est formé dans un matériau distinct dudit matériau rigide, et plus souple que ce dernier.

11. Procédé de fabrication selon l'une des revendications précédentes **caractérisé en ce qu'**il comprend une étape (d) de montage d'organe d'étanchéité (12), au cours de laquelle on enfile sur le moyeu (10), et l'on engage dans la gorge (11), un organe d'étanchéité (12) annulaire en élastomère, de type joint torique.

12. Dispositif de direction pour véhicule comprenant au moins un mécanisme de direction, tel qu'un réducteur à engrenage, qui est logé dans un carter (3) de direction présentant une paroi de carter (4) percée d'au moins un orifice accès (6) qui est obturé par un bouchon, ledit bouchon (1) comprenant un moyeu (10) qui s'étend selon un axe central (XX'), coïncidant sensiblement avec l'axe central de l'orifice d'accès (6), et ledit moyeu (10) étant délimité radialement, autour dudit axe central (XX'), par une paroi latérale (10L) dans laquelle est creusée une gorge (11) annulaire qui entoure l'axe central (XX') et qui reçoit un organe d'étanchéité (12) venant au contact de la paroi du carter (4), ladite gorge (11) étant comprise entre d'une part une paroi de fond (13), qui forme, radialement à l'axe central (XX'), le fond de ladite gorge, et d'autre part une première paroi de bord (14), annulaire, et une seconde paroi de bord (15), annulaire, qui délimitent axialement ladite gorge le long de l'axe central (XX'), ledit dispositif de direction étant **caractérisé en ce que** le moyeu (10) du bouchon (1) est formé par la réunion d'un premier tronçon de moyeu (10.1) qui s'étend selon une première portion de l'axe central (XX') et sur lequel est formée la première paroi de bord (14), et d'un second tronçon de moyeu (10.2), fabriqué séparément et initialement distinct du premier tronçon de moyeu (10.1), et qui s'étend selon une seconde portion de l'axe central (XX'), et sur lequel est formée la seconde paroi de bord (15), le premier tronçon de moyeu et le second tronçon de moyeu étant assemblés l'un à l'autre de telle manière que le premier tronçon de moyeu et le second tronçon de moyeu se joignent selon un plan de joint (P0) qui est sécant à l'axe central (XX') et qui est sécant à la paroi de fond (13) de la gorge (11).

## Patentansprüche

1. Verfahren zur Herstellung eines Stopfens (1), umfassend eine Nabe (10), die sich entlang einer Mittelachse (XX') erstreckt und die radial um die Mittelachse (XX') herum durch eine Seitenwand (10L) eingegrenzt ist, in welche eine ringförmige Nut (11) gegraben ist, welche die Mittelachse (XX') umgibt, und dazu bestimmt ist, ein Dichtorgan (12) aufzunehmen, wobei die Nut zwischen einerseits einer Bodenwand (13), welche radial zur Mittelachse (XX') den Boden der Nut (11) bildet, und andererseits einer ersten ringförmigen Einfassungswand (14) und einer zweiten ringförmigen Einfassungswand (15) enthalten ist, welche die Nut (11) axial entlang der Mittelachse (XX') eingrenzen, wobei das Verfahren **dadurch gekennzeichnet ist, dass** es einen Schritt (a) zur Herstellung eines ersten Nabenteilstücks beinhaltet, im Laufe dessen ein erstes Nabenteilstück (10.1) realisiert wird, das sich entlang eines ersten Abschnitts der Mittelachse erstreckt und auf dem die erste Einfassungswand (14) gebildet wird, einen Schritt (b) zur Herstellung eines zweiten Nabenteilstücks, im Laufe dessen getrennt ein zweites Nabenteilstück (10.2) realisiert wird, welches sich vom ersten Nabenteilstück (10.1) unterscheidet, und welches sich entlang eines zweiten Abschnitts der Mittelachse erstreckt, und auf dem die zweite Einfassungswand (15) gebildet wird, dann einen Schritt (c) zur Errichtung einer Nabe (10), im Laufe dessen das erste Nabenteilstück (10.1) mit dem zweiten Nabenteilstück (10.2) zusammengesetzt wird, um die ringförmige Nut (11) zwischen der ersten Einfassungswand (14) und der zweiten Einfassungswand (15) zu kreieren, und dergestalt, dass das erste Nabenteilstück (10.1) und das zweite Nabenteilstück (10.2) gemäß einer Trennebene (P0) zusammenstoßen, welche sich mit der Mittelachse (XX') schneidet, und sich mit der Bodenwand (13) der Nut (11) schneidet.

2. Verfahren zur Herstellung nach Anspruch 1, **dadurch gekennzeichnet, dass** die Trennebene (P0) senkrecht zur Mittelachse (XX') ist.

3. Verfahren zur Herstellung nach Anspruch 1 oder 2, **dadurch gekennzeichnet, dass** die Bodenwand (13) mehrheitlich, und vorzugsweise vollständig von dem zweiten Nabenteilstück (10.2) getragen wird, innerhalb dessen die Bodenwand (13) in einem einzigen Stück mit der zweiten Einfassungswand (15) einen Ansatz (20) bildet.

4. Verfahren zur Herstellung nach einem der vorstehenden Ansprüche, **dadurch gekennzeichnet, dass** das Zusammensetzen des ersten Nabenteilstücks (10.1) mit dem zweiten Nabenteilstück (10.2) durch klemmendes Einrasten vorgenommen wird.

5. Verfahren zur Herstellung nach einem der vorstehenden Ansprüche, **dadurch gekennzeichnet, dass** beim Schritt (a) zur Herstellung des ersten Nabenteilstücks auf dem ersten Nabenteilstück (10.1) ein vorspringender Koppelkranz (21) gebildet wird, der sich mittig auf der Mittelachse (XX') befindet, dadurch, dass beim Schritt (b) zur Herstellung des zweiten Nabenteilstücks in dem zweiten Nabenteilstück (10.2) eine Kopplungsrille (22) in einer im Wesentlichen von jener des Koppelkranzes (21) abgeleiteten Form vorgesehen wird, und dadurch, dass beim Schritt (c) zur Errichtung einer Nabe der Koppelkranz (21) axial in die Kopplungsrille (22) eingerastet wird.

6. Verfahren zur Herstellung nach Anspruch 5, **dadurch gekennzeichnet, dass** der Koppelkranz (21) mit radial vorstehenden Klauen (23) versehen ist, die das automatische Klemmen des Koppelkranzes (21) in der Kopplungsrille (22) ermöglichen.

7. Verfahren zur Herstellung nach einem der vorstehenden Ansprüche, **dadurch gekennzeichnet, dass** das zweite Nabenteilstück (10.2) mit einer Befestigungshülse (24) versehen ist, welche angeordnet ist, um durch Zusammenstecken mit der Wand einer Zugangsöffnung (6) zusammenzuwirken, die gestaltet ist, um den Stopfen (1) aufzunehmen.

8. Verfahren zur Herstellung nach Anspruch 7, **dadurch gekennzeichnet, dass** die Befestigungshülse (24) vorzugsweise auf ihrer radial innenliegenden Seite, die zur Mittelachse (XX') ausgerichtet ist, mit nicht durchgehenden Ausnehmungen (26) versehen ist, die die Dicke der Befestigungshülse (24) lokal verringern, um deren Flexibilität zu verbessern.

9. Verfahren zur Herstellung nach einem der vorstehenden Ansprüche, **dadurch gekennzeichnet, dass** das erste Nabenteilstück (10.1) und/ oder das zweite Nabenteilstück (10.2) aus einem einzigen Stück aus Polymermaterial, vorzugsweise durch Spritzguss gebildet wird.

10. Verfahren zur Herstellung nach einem der vorstehenden Ansprüche, **dadurch gekennzeichnet, dass** das erste Nabenteilstück (10.1) und das zweite Nabenteilstück (10.2) jeweils aus einem starren Polymermaterial gebildet sind, während das Dichtorgan (12) aus einem Material gebildet ist, das sich von dem starren Material unterscheidet, und elastischer als dieses letztere ist.

11. Verfahren zur Herstellung nach einem der vorstehenden Ansprüche, **dadurch gekennzeichnet, dass** es einen Schritt (d) zum Montieren eines Dichtorgans (12) umfasst, im Laufe dessen ein ringförmiges Dichtorgan (12) aus Elastomer, in der Art eines O-Rings, auf die Nabe (10) aufgezogen und in die Nut (11) eingeführt wird.

12. Lenkvorrichtung für ein Fahrzeug, mindestens einen Lenkmechanismus, wie ein Untersetzungsgetriebe umfassend, welches in einem Lenkgehäuse (3) untergebracht ist, welches eine Gehäusewand (4) aufweist, in welche mindestens eine Zugangsöffnung (6) gebohrt ist, die durch einen Stopfen verschlossen ist, wobei der Stopfen (1) eine Nabe (10) umfasst, welche sich entlang einer Mittelachse (XX') erstreckt, welche im Wesentlichen mit der Mittelachse der Zugangsöffnung (6) übereinstimmt, wobei die Nabe (10) radial um die Mittelachse (XX') herum durch eine Seitenwand (10L) eingegrenzt ist, in welche eine ringförmige Nut (11) gegraben ist, welche die Mittelachse (XX') umgibt, und ein Dichtorgan (12) aufnimmt, welche mit der Wand des Gehäuses (4) in Kontakt kommt, wobei die Nut (11) zwischen einerseits einer Bodenwand (13), welche radial zur Mittelachse (XX') den Boden der Nut bildet, und andererseits einer ersten ringförmigen Einfassungswand (14) und einer zweiten ringförmigen Einfassungswand (15) enthalten ist, welche die Nut axial entlang der Mittelachse (XX') eingrenzen, wobei die Lenkvorrichtung **dadurch gekennzeichnet ist, dass** die Nabe (10) des Stopfens (1) durch die Vereinigung eines ersten Nabenteilstücks (10.1), das sich entlang eines ersten Abschnitts der Mittelachse (XX') erstreckt und auf dem die erste Einfassungswand (14) gebildet wird, und eines zweiten Nabenteilstücks (10.2) gebildet wird, welches getrennt hergestellt wird, und sich ursprünglich vom ersten Nabenteilstück (10.1) unterscheidet, und welches sich entlang eines zweiten Abschnitts der Mittelachse (XX') erstreckt, und auf welchem die zweite Einfassungswand (15) gebildet wird, wobei das erste Nabenteilstück und das zweite Nabenteilstück derart miteinander zusammengesetzt werden, dass das erste Nabenteilstück und das zweite Nabenteilstück gemäß einer Trennebene (P0) zusammenstoßen, welche sich mit der Mittelachse (XX') schneidet, und welche sich mit der Bodenwand (13) der Nut (11) schneidet.

## Claims

1. A method for manufacturing a plug (1) comprising a hub (10) that extends along a central axis (XX') and that is radially delimited about said central axis (XX'), by a side wall (10L) wherein is hollowed an annular groove (11) surrounding the central axis (XX') and which is intended to receive a sealing member (12), said groove being comprised between, on the one hand, a bottom wall (13) which forms, radially to the central axis (XX'), the bottom of said groove (11) and, on the other hand, a first annular edge wall (14), and a second annular edge wall (15), that axially delimit said groove (11) along the central axis (XX'), said method being **characterized in that** it includes a step (a) of manufacturing a first hub segment, during which a first hub segment (10.1) is made, which extends along a first portion of the central axis and on which the first edge wall (14) is formed, a step (b) of manufacturing a second hub segment, during which a second hub segment (10.2) is made separately, distinct from the first hub segment (10.1), which extends along a second portion of the central axis and on which the second edge wall (15) is formed, and then a step (c) of constituting the hub (10), during which the first hub segment (10.1) is assembled with the second hub segment (10.2) in order to create the annular groove (11) between the first edge wall (14) and the second edge wall (15), and so that the first hub segment (10.1) and the second hub segment (10.2) meet according to a parting line (P0) that is secant to the central axis (XX') and secant to the bottom wall (13) of the groove (11).

2. The manufacturing method according to claim 1 **characterized in that** the parting line (P0) is perpendicular to the central axis (XX').

3. The manufacturing method according to claim 1 or 2 **characterized in that** the bottom wall (13) is predominantly, and preferably entirely, carried by the second hub segment (10.2), within which said bottom wall (13) forms contiguously with the second edge wall (15), a shoulder (20).

4. The manufacturing method according to any of the preceding claims **characterized in that** the assembly of the first hub segment (10.1) with the second hub segment (10.2) is operated by tight-interlocking.

5. The manufacturing method according to any of the preceding claims **characterized in that**, during step (a) of manufacturing the first hub segment, a protruding coupling crown (21) centered on the central axis (XX') is formed on said first hub segment (10.1), and **in that**, during step (b) of manufacturing the second hub segment, a coupling slot (22) with a shape substantially matching the shape of the coupling crown (21) is formed in the second hub segment (10.2), and **in that**, during step (c) of constituting the hub, the coupling crown (21) is axially interlocked in the coupling slot (22).

6. The manufacturing method according to claim 5 **characterized in that** the coupling crown (21) is provided with radially protruding lugs (23), allowing the automatic clamping of said coupling crown (21) in the coupling slot (22).

7. The manufacturing method according to any of the preceding claims **characterized in that** the second hub segment (10.2) is provided with a fastening collar (24) arranged to cooperate by snap-fitting with the wall of an access orifice (6) adapted to receive the plug (1).

8. The manufacturing method according to claim 7 **characterized in that** the fastening collar (24) is provided, preferably on its radially inner face oriented towards the central axis (XX'), with non-through recesses (26) that locally reduce the thickness of said fastening collar (24) in order to improve the flexibility.

9. The manufacturing method according to any of the preceding claims **characterized in that** the first hub segment (10.1) and/or the second hub segment (10.2) is formed contiguously of a polymeric material, preferably by injection molding.

10. The manufacturing method according to any of the preceding claims **characterized in that** the first hub segment (10.1) and the second hub segment (10.2) are each formed of rigid polymeric material, while the sealing member (12) is formed in a material distinct from said rigid material and more flexible than the latter.

11. The manufacturing method according to any of the preceding claims, **characterized in that** it comprises a step (d) of mounting a sealing member (12), during which an annular elastomeric sealing member (12) of the O-ring type is slipped on the hub (10) and engaged in the groove (11).

12. A steering device for a vehicle comprising at least a steering mechanism such as a gear reducer, which is housed in a steering casing (3) that has a casing wall (4) having at least one access orifice (6) sealed by a plug, said plug (1) comprising a hub (10) extending along a central axis (XX') substantially coinciding with the central axis of the access orifice (6), and said hub (10) being radially delimited about said central axis (XX'), by a side wall (10L) wherein is hollowed an annular groove (11) that surrounds the central axis (XX') and that receives a sealing member (12) coming into contact with the casing wall (4), said groove (11) being comprised between, on the one hand, a bottom wall (13), which forms, radially to the central axis (XX'), the bottom of said groove and, on the other hand, a first annular edge wall (14) and a second annular edge wall (15) axially delimiting said groove along the central axis (XX'), said steering device being **characterized in that** the hub (10) of the plug (1) is formed by joining a first hub segment (10.1) extending according to a first portion of the central axis (XX') and on which the first edge wall (14) is formed, and a second hub segment (10.2), manufactured separately and initially distinct from the first hub segment (10.1), and extending along a second portion of the central axis (XX'), and on which the second edge wall (15) is formed, the first hub segment and the second hub segment being assembled together such that the first hub segment and the second hub segment meet according to a parting line (P0) secant to the central axis (XX') and secant to the bottom wall (13) of the groove (11).
